# EUROPEAN PATENT SPECIFICATION

(11) **EP 1 172 343 B1**
(45) Date of publication and mention of the grant of the patent: **11.05.2011**
(21) Application number: 01904484.1
(22) Date of filing: 15.02.2001
(51) Int. Cl.: C04B 20/00, C04B 28/02, B28C 7/00, E21D 11/10, C04B 22/08, C04B 22/14, C04B 22/06, C04B 24/04, C04B 14/44, C04B 16/06, C04B 24/20, C04B 24/38, C04B 24/26

(54) **CEMENT MORTAR AND SHOOTING MATERIAL**
ZEMENTMÖRTEL UND EINSPRITZBARES MATERIAL
MORTIER AU CIMENT ET MATERIAU D'INJECTION

(30) Priority: 16.02.2000 JP 2000037979
(43) Date of publication of application: 16.01.2002
(73) Proprietor: DENKI KAGAKU KOGYO KABUSHIKI KAISHA, Chiyoda-ku, Tokyo 100-8455 (JP)
(72) Inventor: ARAKI, Akitoshi, c/o Denki Kagaku Kogyo K. K., Nishi-kubiki-gun, Niigata 949-0305 (JP); KOIDE, Takeshi, c/o Denki Kagaku Kogyo K. K., Nishi-kubiki-gun, Niigata 949-0305 (JP); TERASHIMA, Isao, c/o Denki Kagaku Kogyo K. K., Nishi-kubiki-gun, Niigata 949-0305 (JP)
(74) Representative: Hartz, Nikolai
(86) International application number: PCT/JP2001/001096
(87) International publication number: WO 2001/060760

(56) References cited:
- EP-A- 0 428 431
- EP-A- 0 839 774
- EP-A- 0 943 588
- EP-A1- 0 769 482
- EP-A2- 0 566 413
- WO-A-99/67183
- FR-A1- 2 623 492
- JP-A- 06 144 903
- JP-A- 09 227 198
- JP-A- 10 324 553
- JP-A- 11 209 158
- JP-A- 2000 191 379

## Description

### TECHNICAL FIELD

The present invention relates to a spraying method of a mortar for preventing fall of an exposed ground, the exposed surface of which is produced in construction of a road, a railroad or a channel, and their tunnel construction. Also, the present invention relates to a spraying method of a mortar for repairing cracks, deteriorated concrete structures or the like.

### BACKGROUND ART

A spraying method employing a spraying material comprising a specific cement mortar and an accelerating agent is known from EP-A- 0 769 482.

Recently, in addition to NATM method, a method of digging by using a tunnel boring machine (TBM) as a tunnel-digging method for constructing a channel tunnel, a road tunnel, a railroad tunnel and the like. When using the method of digging by TBM, a spraying mortar is used for stabilizing a ground immediately after digging.

Also, when repairing deteriorated concrete structures, a repairing spraying method is carried out by exposing a chipping or reinforcing steel of concrete and spraying a new mortar thereon. If an accelerating agent is used, there is a fear that durability of a long term strength-developing property or the like becomes poor, and therefore a conventional mortar for repairing did not contain an accelerating agent or contained only an accelerating agent having a weak accelerating force. Thus, heretofore, it was necessary to repeatedly spray for a few times when spraying to a thickness of at least 10 cm.

However, a conventional spraying method employed a large scale processing machine for batch kneading, and a spraying mortar had to be introduced from outside in case of tunnel construction. Therefore, there were problems that an operation space and a lifetime of a spraying mortar were limited. Also, since a large amount of air was required for spraying, there were problems that amount of dust generated was large, that working environment became bad and that an air cooling apparatus for TBM was degraded.

In order to solve these problems, there has been proposed a spraying method to reduce the operation time by using a batch-kneaded mortar or a quick-settable slurry and to improve working environment (JP-A-3-122040).

### PROBLEMS THAT THE INVENTION IS TO SOLVE

However, when a spraying mortar or a quick-settable slurry was kneaded by batch-system, the operation became complicated and a lifetime of each material was limited. Therefore, mechanical troubles occurred during spraying operation, and if it took a considerable time for recovery, the materials used must have been discarded. Also, since a setting time of a quick-settable spraying mortar prepared by mixing a spraying mortar and a quick-settable slurry was long, the quick-settable spraying mortar was hardly adhered and it was necessary to repeatedly spraying by making a working time longer in order to provide the sprayed mortar having a predetermined thickness. Therefore, there was a problem that it was difficult to use this conventional spraying mortar at a spring water place. Also, when it was necessary to repeatedly spray, there was a problem that an operation time for spraying became long and consequently that an operation cost became high.

In a method of spraying for repairing, it was necessary to provide a sufficient durability since a repaired set material became a permanent structure, and it was therefore necessary to make a water/cement ratio lower. Therefore, it was necessary to prepare a wet cement mortar having a stable quality by batch-kneading to effect a sufficient kneading which required a considerable time. Accordingly, there was a problem that an operation time was long and the operation became complicated.

The present inventors have studied for solving the above-mentioned problems, and have discovered that the above problems can be solved by providing a specific spraying material and a specific operation method. The present invention has been accomplished on the basis of this discovery.

### MEANS OF SOLVING THE PROBLEMS

That is, the present invention provides a spraying method employing a dry cement mortar as further defined by claim 1; whereby
the dry cement mortar may further contain a slaked lime-containing material;
the dry cement mortar may further contain an organic acid;
the dry cement mortar may further contain a fibrous material;
the dry cement mortar may further contain a thickener;
the dry cement mortar may further contain a water-reducing agent;
the dry cement mortar may further contain a water-absorptive material;
the dry cement mortar may further contains an alkali metal sulfate and/or an alkali metal carbonate. The dry cement mortar wherein an aggregate having a maximum particle diameter ratio of at most 0.1 to an inner diameter of a distributing tube pressure-injecting the cement mortar is used in a mass ratio of from 1.5 to 2.5 to cement.

The dry cement mortar contains an accelerating agent which is at least one member selected from the group consisting of calcium aluminates, an alkali metal aluminate, aluminum sulfate, a silicate and a hydroxide; and preferably the accelerating agent is a calcium aluminate.

The dry cement mortar may further contain gypsum.

Also, the present invention employs a wet cement mortar containing the above dry cement mortar and water;
wherein water is contained in an amount of from 15 to 25 mass parts to 100 mass parts of the dry cement mortar.

Specifically the present invention employs a spraying material containing the above wet cement mortar and an accelerating agent; whereby
a spraying material may be for a tunnel, which comprises the above spraying material; and
a spraying material may be for repairing, which comprises the above spraying material.

Still further, the present invention employs a method for preparing a wet cement mortar, characterized by continuously preparing a wet cement mortar by mixing the above dry cement mortar with water by a continuous kneading system mixer.

Also, the present invention employs a spraying method, characterized by admixing water during pressure-injecting the above dry cement mortar.

The spraying method may be characterized by admixing an accelerating agent during pressure-injecting the above wet cement mortar.

### BEST MODE FOR CARRYING OUT THE INVENTION

Hereinafter, the present invention is described in more details.

The present invention employs a dry cement mortar obtained by mixing cement and an aggregate previously before charging dry materials into a continuous mixer. The dry cement mortar may be prepared at a spraying site, or may employ a premixed product previously mixed. It is preferable that the dry cement mortar previously contains an accelerating agent, preferably a calcium aluminate.

Further, in the present invention, a wet cement mortar is prepared by mixing a dry cement mortar with water. In addition to an accelerating agent previously contained in a dry cement mortar, a wet cement mortar may also contain an accelerating agent and it is preferable to prepare a quick-settable wet cement mortar by mixing a liquid-like accelerating agent therewith.

The dry cement mortar and the wet cement mortar can be prepared by using a relatively small continuous kneading system mixer (hereinafter referred to as "continuous kneading mixer"). The wet cement mortar can be immediately mixed with an accelerating agent to prepare a quick-settable wet cement mortar and can be sprayed.

A wet cement mortar mixed by a continuous kneading mixer can be prepared by controlling a supplying speed of water to a dry cement mortar supplied by a feeder.

The continuous kneading system is unlike ordinary batch kneading, and is characterized in that a mixing time of water and a dry cement mortar can be made much shorter. Therefore, it is necessary to mix water and a dry cement mortar sufficiently within a short time, and it is important to control a ratio of cement to an aggregate having a maximum particle diameter of at most 0.1 to an inner diameter of a distributing tube pressure-injecting the cement mortar.

Also, a ratio of water used to a dry cement mortar has a large influence on a pressure-injecting property of a wet cement mortar.

Therefore, in order to reduce mechanical troubles and to maintain a quality of a spraying mortar obtained stable, spraying is carried out by appropriately controlling a ratio of cement to an aggregate and a ratio of water to a dry cement mortar.

As mentioned above, in order to carry out continuous kneading, it is necessary to appropriately specify a ratio of (aggregate)/(cement) and a ratio of (water)/(material). It is very important to specify in this manner for providing a wet cement mortar having a stable quality, reducing operation troubles and raising reliability of structure when a spraying time becomes long in tunnel construction or when a sufficient durability is required in spraying for repairing.

The dry cement mortar used in the present invention is a cement mortar obtained by mixing cement and an aggregate previously before charging dry materials into a continuous kneading mixer. Hereinafter, its composition is fully described.

An aggregate used in the present invention may be natural sand, silica sand or lime sand, and has a maximum particle diameter of at most 0.1, preferably at most 0.06, to an inner diameter of a distributing tube (including a pressure-injecting hose) pressure-injecting a cement mortar, i.e. (maximum particle diameter of aggregate)/(inner diameter of distributing tube)=at most 0.1, preferably at most 0.06. If this ratio exceeds 0.1, a pressure-injecting property becomes poor, and an amount of rebound in spraying operation tends to become large.

In the present invention, an aggregate is used in a mass ratio of from 1.5 to 3.0, preferably from 1.8 to 2.7, to cement. If the mass ratio of an aggregate used is lower than 1.5, a pressure injection property and a crack resistance of a set product tend to become poor, and if the mass ratio of an aggregate used exceeds 3.0, a mixing property with water and a pressure injection property tend to become poor.

Examples of cement used in the present invention include commercially available various Portland cements such as normal Portland cement, high-early-strength Portland cement, moderate heat Portland cement, ultrahigh-early-strength Portland cement or low heat cement, and various mixed cements obtained by mixing fly ash, blast furnace slag or the like with these Portland cements, and commercially available fine grain cement, and the like. These Portland cements and mixed cements may be used by finely pulverizing. Among them, high-early-strength Portland cement is preferable in respect of strength-developing property.

In the present invention, in order to improve setting properties, a dry cement mortar preferably contains a slaked lime-containing material.

Examples of the slaked lime-containing material include slaked lime, calcium carbide residue by-produced when producing acetylene by mixing calcium carbide with water, and the like.

A particle size of the slaked lime-containing material is not specially limited, but is preferably at most 100 µm, more preferably at most 60 µm, in view of solubility.

The slaked lime-containing material is used preferably in an amount of from 0.5 to 10 mass parts, more preferably from 2 to 7 mass parts, to 100 mass parts of cement. If this amount is less than 0.5 mass part, a sufficient setting property can not be obtained and a satisfactory strength-developing property can not be expected, and if this amount exceeds 10 mass parts, a strength-developing property after a lapse of one day tends to become low.

Also, in the present invention, it is preferable to incorporate an organic acid into a dry cement mortar in order to relax a quick-setting property when using a calcium aluminate or a slaked lime-containing material and to secure a minimum handling time.

Examples of organic acids include citric acid, gluconic acid, tartaric acid, malic acid, and their sodium salts or potassium salts, and they may be used alone or in a mixture of two or more. Among them, it is preferable to use at least one organic acid selected from the group consisting of citric acid, gluconic acid, tartaric acid and their sodium salts and potassium salts since they do not inhibit an initial strength-developing property.

A particle size of organic acids is not specially limited, but a particle size of generally commercially available products is acceptable.

An organic acid is used in an amount of preferably from 0.1 to 2 mass parts, more preferably from 0.3 to 1 mass part, to 100 mass parts of cement. If this amount is less than 0.1 mass part, a satisfactory handling time of a wet cement mortar can not be secured, and if this amount exceeds 2 mass parts, a setting time becomes too long and sagging or peeling tends to occur when it is sprayed.

Further, in the present invention, it is preferable to incorporate a fibrous material into a dry cement mortar. The fibrous material is used to provide a bending durability for preventing peeling caused by cracking or by a large force applied to a structure.

Examples of the fibrous material include inorganic fibers such as ceramic whisker fiber, alkali-resistant glass fiber or the like, organic fibers such as polyethylene fiber, vinylon fiber, aramid fiber, polyacryl fiber or the like, metal fibers such as steel fiber, and carbon fiber or the like. Among them, it is preferable for providing a large bending durability to use at least one member selected from the group consisting of alkali-resistant glass fiber, polyethylene fiber, polypropylene fiber, vinylon fiber, polyacryl fiber and carbon fiber.

A length of the fibrous material is not specially limited, but is preferably from 3 to 12 mm, more preferably from 5 to 12 mm.

The fibrous material is used in an amount of preferably from 0.4 to 1.5 mass parts, more preferably from 0.5 to 1.2 mass parts, to 100 mass parts of a dry cement mortar other than the fibrous material. If this amount is less than 0.4 mass part, a satisfactory bending durability can not be provided, and if this amount exceeds 1.5 mass parts, a pressure injection property of a wet cement mortar tends to become poor.

Still further, in the present invention, it is preferable to incorporate a thickener into a dry cement mortar in order to improve an adhesion between a paste and an aggregate surface in a wet cement mortar or to improve an adhesive property to a surface to be sprayed, thereby reducing a rebound amount.

A hydrophilic high molecular compound may be used as a thickener, examples of which include celluloses such as carboxylmethyl cellulose, methyl cellulose, hydroxypropyl cellulose, methyl ethyl cellulose and ethyl cellulose, polyalkylene oxides such as polyethylene oxide, polypropylene oxide and polybutylene oxide, polysaccharides such as amylose, agar, alginic acid, sodium alginate, pullulan and guar gum, polyvinyl alcohol, polyacrylic acid, polyacrylic acid ester, polyacrylic acid salt, polyvinyl acetate, and the like. Also, a copolymer comprising vinyl alcohol, ethylene oxide, acrylic acid, acrylic acid ester, acrylic acid salt, vinyl acetate or the like may be used. Among them, celluloses and/or polyalkylene oxides are preferable in respect that an effect of reducing rebound is high and a strength-developing property is not inhibited. Among the celluloses, methyl cellulose is preferable in respect that an effect of reducing rebound is high and a strength-developing property is not inhibited. Among the polyalkylene oxides, polyethylene oxide is preferable in respect that an effect of reducing rebound is high and a strength-developing property is not inhibited.

A thickener is used in an amount of preferably from 0.001 to 0.2 mass part, more preferably from 0.01 to 0.1 mass part, to 100 mass parts of cement. If this amount is less than 0.001 mass part, an adhesive property is not satisfactorily improved and rebound is not reduced, and if this amount exceeds 0.2 mass part, a pressure injection property of a cement mortar is inhibited.

Also, in the present invention, it is preferable to incorporate a water-reducing agent into a cement mortar in order to improve a fluidity.

Examples of the water-reducing agent include a lignin sulfonate or its derivative and a high performance water-reducing agent, and they may be used alone or in a mixture of two or more. Among them, a high performance water-reducing agent is preferable in respect that an initial setting property and a strength-developing property are not adversely affected.

Examples of the high performance water-reducing agent include a polyol derivative, an aromatic sulfonic acid type high performance water-reducing agent, a polycarboxylic acid type high performance water-reducing agent, a melamine type high performance water-reducing agent, and their mixtures. Among them, an aromatic sulfonic acid type high performance water-reducing agent is preferable in respect that an initial setting property and a strength-developing property are not adversely affected. Herein, aromatic sulfonic acid type includes an aromatic sulfonate, and polycarboxylic acid type includes a polycarboxylate.

Examples of the aromatic sulfonic acid type high performance water-reducing agent include an aromatic sulfonic acid and/or an aromatic sulfonic acid-formaldehyde condensate.

Examples of the aromatic sulfonic acid include naphthalenesulfonic acid, alkylnaphthalenesulfonic acid bisphenol A sulfonic acid, phenolsulfonic acid, trisphenolsulfonic acid, 4-phenoxybenzene-4'-sulfonic acid, methyldiphenylethersulfonic acid, anthracenesulfonic acid, their sodium salt or potassium salt and the like. Also, an aromatic ring may contain an alkyl group. Examples of the alkyl group include a methyl group, an ethyl group, a propyl group, and the like. Examples of the aromatic sulfonic acid-formaldehyde condensate include formaldehyde condensates of these aromatic sulfonic acids and their sodium salt or potassium salt. Among them, an aromatic sulfonate-formaldehyde condensate is preferable, and particularly, at least one member selected from the group consisting of a naphthalenesulfonate-formaldehyde condensate, an alkylnaphthalenesulfonate-formaldehyde condensate and a bisphenol A sulfonate-formaldehyde condensate is more preferable, and a β-naphthalenesulfonate-formaldehyde condensate (hereinafter referred to as "β-NS") is most preferable in respect that an initial setting property and a strength-developing property are not adversely affected.

A water-reducing agent is used in an amount of preferably from 0.03 to 0.5 mass part (calculated in terms of solid content), more preferably from 0.05 to 0.3 mass part, to 100 mass parts of cement. If this amount is less than 0.03 mass part, a satisfactory fluidity can not be maintained, and if this amount exceeds 0.5 mass part, a strength-developing property is inhibited.

Further, in the present invention, it is preferable to incorporate a water-absorptive material into a dry cement mortar. The water-absorptive material used in the present invention is a material swellable by absorbing water, which imparts a satisfactory stiffness to a cement mortar, thereby raising an adhesive property of a cement mortar and improving an adhesive property to a surface to be sprayed.

As the water-absorptive material, a clay mineral or a water-absorptive polymer is preferable. Among them, a clay mineral is preferable in view of a strength-developing property.

Examples of the clay mineral include beidellite, kaolinite, halloysite, montmorillonite, pyrophyllite, vermiculite, mica, chlorite, saponite, sepiolite, acid clay, and the like, which comprise layered aluminosilicates as the main component, and they may be used alone or in a mixture of two or more. Among them, bentonite comprising montmorillonite as the main component is preferable, since it contains a divalent or higher valent metal ion such as an aluminum ion or a calcium ion and is therefore easily gelled, and can be produced on a large scale at a low price.

A clay mineral is used in an amount of preferably from 0.5 to 10 mass parts, more preferably from 0.8 to 5 mass parts, to 100 mass parts of cement. If this amount is less than 0.5 mass part, it becomes difficult to provide a cement mortar in a satisfactory stiff state at the time of spraying, and if this amount exceeds 10 mass parts, a fluidity and a pressure injection property are lowered.

Examples of a water-absorptive polymer include a three-dimensional crosslinked polymer comprising poly-N-vinylacetamide as the main component, a starch-polyacrylonitrile copolymer, a saponified product of vinyl ester-ethylene type unsaturated carboxylic acid copolymer, a self-crosslinked polyacrylic acid salt obtained by reverse phase suspension polymerization method, a reaction product of polyvinyl alcohol type polymer and cyclic acid anhydride, a polyacrylic acid salt-crosslinked product, a vinyl alcohol-acrylic acid salt copolymer, and the like.

A maximum particle size of a water-absorptive polymer is preferably at most 500 µm in view of water-absorbing speed. A water-absorbing magnification of a water-absorptive polymer is preferably at least 10 times of the self weight, more preferably at least 30 times of the self weight, in order to secure a satisfactory stiff state.

A water-absorptive polymer is used in an amount of preferably from 0.001 to 0.1 mass part, more preferably from 0.005 to 0.06 mass part, to 100 mass parts of cement. If this amount is less than 0.001 mass part, it is difficult to impart a satisfactory stiffness to a cement mortar, and if this amount exceeds 0.1 mass part, a stiffness becomes too large, thereby lowering a fluidity and a pressure injection property, and a strength-developing property is inhibited.

Further, in the present invention, it is preferable to incorporate an alkali metal sulfate (hereinafter referred to as "alkali sulfate") and/or an alkali metal carbonate (hereinafter referred to as "alkali carbonate") into a dry cement mortar. In the present invention, the alkali sulfate is used in order to impart a strength-increasing effect at a lapse of one day. If the strength-increasing effect at a lapse of one day is large, it provides an effect of preventing falling of an exposed ground or land at an early stage when sprayed on an exposed surface of ground or land. Also, the alkali carbonate imparts a strength-increasing effect in the same manner as the alkali sulfate, and is used in order to provide a satisfactory setting property.

Examples of the alkali sulfate include sodium sulfate, potassium sulfate, lithium sulfate and the like, and they may be used alone or in a mixture of two or more. Among them, sodium sulfate is preferable since it is easily available.

An alkali sulfate is used in an amount of preferably from 0.2 to 5 mass parts, more preferably from 0.5 to 3 mass parts, to 100 mass parts of cement. If this amount is less than 0.2 mass part, it is difficult to impart a strength-increasing effect at a lapse of one day, and if this amount exceeds 5 mass parts, an initial setting time becomes too long and sagging or peeling is occurred when sprayed.

Examples of an alkali carbonate include sodium carbonate, potassium carbonate, lithium carbonate, sodium hydrogencarbonate, potassium hydrogencarbonate, lithium hydrogencarbonate, and the like, and they may be used alone or in a mixture of two or more. Among them, sodium carbonate is preferable in view of an initial setting property.

An alkali carbonate is used in an amount of preferably from 0.2 to 5 mass parts, more preferably from 0.5 to 3 mass parts, to 100 mass parts of cement. If this amount is less than 0.2 mass part, it is difficult to provide a strength-increasing effect, and if this amount exceeds 5 mass parts, an initial setting time becomes too long and sagging or peeling is caused when sprayed.

Also, in the present invention, in addition to cement and an aggregate, it is preferable to incorporate an accelerating agent into a dry cement mortar in order to provide a satisfactory setting property and a satisfactory initial strength-developing property.

The accelerating agent used in the present invention is preferably at least one member selected from the group consisting of calcium aluminates, alkali metal aluminates (hereinafter referred to as "alkali aluminate"), aluminum sulfate, silicates and hydroxides.

An accelerating agent to be previously incorporated into a dry cement mortar is preferably powder-like, and is preferably calcium aluminates since they provide a satisfactory setting property and a satisfactory initial strength-developing property.

A calcium aluminate is a general name of a material comprising CaO and Al₂O₃ as the main components and having a hydration activity, which can be obtained by mixing a calcia-containing material, an alumina-containing material, and the like, and heat-treating the mixture by calcinating in a kiln or melting in an electric furnace, and a part of CaO and/or Al₂O₃ may be substituted with a material such as an alkali metal oxide, an alkali earth metal oxide, silicon oxide, titanium oxide, iron oxide, an alkali metal halide, an alkali earth metal halide, an alkali metal sulfate, an alkali earth metal sulfate or the like, or a small amount of these materials may be solid-solubled into the material comprising CaO and Al₂O₃ as the main components. This mineral may be either in crystalline state or in amorphous state.

Among the calcium aluminates, an amorphous calcium aluminate is preferable in view of reaction activity, and an amorphous calcium aluminate obtained by quenching a heat-treated material having the composition of 12 CaO· 7A1₂O₃ (C₁₂A₇).

The calcium aluminates have a particle size of a Blaine value of preferably at least 3,000 cm²/g, more preferably at least 4,000 cm²/g. If the Blaine value is less than 3,000 cm²/g, it is difficult to provide a satisfactory setting property.

When using the calcium aluminates, an additive such as gypsum or an alkali metal carbonate may be mixed therewith to provide a powdery accelerating agent. Particularly, it is preferable to incorporate gypsum into a dry cement mortar in order to relax a quick-setting property of calcium aluminates and to improve an initial strength-developing property and a long term strength-developing property.

An amount of an accelerating agent previously contained in a dry cement mortar is preferably from 0.5 to 10 mass parts, more preferably from 2 to 5 mass parts, to 100 mass parts of cement. If this amount is less than 0.5 mass part, a satisfactory setting property can not be obtained and a satisfactory initial strength-developing property can not be obtained, and if this amount exceeds 10 mass parts, a setting reaction proceeds rapidly, thereby inhibiting a pressure injection property and lowering a long term strength-developing property.

Still further, in the present invention, when a dry cement mortar contains an accelerating agent, it is preferable to use gypsum in order to improve a strength-developing property. Particularly, when the accelerating agent is calcium aluminates, gypsum achieves a great effect.

Gypsum is usually contained in cement in an amount of about 2% in terms of SO₃, but gypsum herein means gypsum to be additionally incorporated in addition to the above originally contained gypsum. Gypsum may be any commercially available anhydrous gypsum, hemihydrate gypsum or gypsum dihydrate, but anhydrous gypsum is preferable in view of a strength-developing property.

Gypsum has a particle size of a Blaine value of preferably at least 2,500 cm²/g, more preferably at least 3,000 cm²/g. If the Blaine value is less than 2,500 cm²/g, a strength-developing property is lowered.

Gypsum is used in an amount of preferably from 20 to 300 mass parts, more preferably from 50 to 200 mass parts, to 100 mass parts of an accelerating agent. If this amount is less than 20 mass parts, a strength-developing property is not improved, and if this amount exceeds 300 mass parts, initial setting is retarded.

In the present invention, a wet cement mortar is prepared by mixing a dry cement mortar with water. Water is used in an amount of from 15 to 25 mass parts, preferably from 17 to 23 mass parts, per 100 mass parts of a dry cement mortar. If this amount is less than 15 mass parts, a wet cement mortar is hardly kneaded and a wet cement mortar becomes an ununiform mixture state and a pressure injection property becomes poor and a quality is varied and a deposit material is easily attached to an inner wall of a pressure-injecting tube, thereby causing operation troubles. On the other hand, if this amount exceeds 25 mass parts, a strength-developing property and a dry shrinkage resistance are lowered.

Further, in the present invention, it is preferable to mix an accelerating agent also with a wet cement mortar in addition to an accelerating agent previously contained in a dry cement mortar. Examples of the accelerating agent include liquid-like, powder-like and slurry-like agents. Among them, a liquid-like accelerating agent is preferable since it does not substantially produce a dust and can be satisfactorily mixed with a wet cement mortar.

A liquid-like accelerating agent is satisfactory if it is liquid-like before mixing with a wet cement mortar.

Examples of an accelerating agent to be mixed with a wet cement mortar include the above-mentioned accelerating agents. It is not necessary to completely dissolve an accelerating component of the liquid-like accelerating agent, but a slurry-like accelerating agent may be used.

Examples of calcium aluminates include the above-mentioned calcium aluminates. When using calcium aluminates, gypsum, alkali aluminate or alkali metal carbonate additives are mixed therewith to prepare a powdery accelerating agent, and the powdery accelerating agent is made slurry-like and is mixed with a wet cement mortar. The slurry-like accelerating agent can be made by conveying the powdery accelerating agent by air and water is conveyed by a pump and added thereto immediately to prepare the slurry-like accelerating agent before mixing with the wet cement mortar.

When using an alkali aluminate, aluminum sulfate, a silicate and a hydroxide, they may be used in a completely dissolved state since they are soluble in water or they may be used in a slurry-like state.

Examples of the alkali aluminate include sodium aluminate, potassium aluminate and the like. Among them, potassium aluminate is preferable since it is satisfactorily soluble in water.

Examples of aluminum sulfate include a commercially available powdery aluminum sulfate, and may be used either in an anhydrous salt or in a hydrate salt.

Examples of a silicate include a commercially available water-glass. Also, a colloidal silica which is a solution having silicic acid stably dispersed in colloid state may be used.

Examples of a hydroxide include an alkali metal hydroxide such as lithium hydroxide, sodium hydroxide and potassium hydroxide, slaked lime, aluminum hydroxide, and the like. Among them, an alkali metal hydroxide, particularly potassium hydroxide, is preferable in respect that it provides a satisfactory setting property and a satisfactory strength-developing property, and a dust amount, a rebound ratio and sagging are reduced.

Among these accelerating agents, a slurry-like accelerating agent prepared by making a powdery accelerating agent comprising calcium aluminates as the main component slurry-like, a liquid accelerating agent comprising an alkali aluminate as the main component, and a liquid accelerating agent comprising aluminum sulfate as the main component, are preferable, and they may be used alone or in a mixture of two or more.

A solid content concentration of a liquid accelerating agent is preferably at least 15 mass%, more preferably at least 20 mass%. If this concentration is less than 15 mass%, an initial setting property is not satisfactory, and a strength-developing property is poor. The upper limit of a solid content concentration of a liquid accelerating agent is not specially limited, but is preferably at most 70 mass% in view of a pressure injection property.

An amount of an accelerating agent to be mixed with a wet cement mortar is preferably from 1 to 20 mass parts (calculated in terms of solid content), more preferably from 2 to 15 mass parts, per 100 mass parts of cement. If this amount is less than 1 mass part, setting can not be satisfactorily effected, and if this amount exceeds 20 mass parts, a water amount is increased to cement, and a strength-developing property is lowered.

A spraying method in accordance with the present intention is carried out preferably by using a continuous kneading mixer, and comprises pressure-injecting a wet cement mortar (agent A) prepared by the continuous kneading mixer and a liquid accelerating agent (agent B) respectively alone, mixing the agent A and the agent B through a Y-shaped junction tube (Y letter-shaped tube) to prepare a quick-settable wet cement mortar, and spraying the quick-settable wet cement mortar thus prepared through a nozzle. This spraying method provides a satisfactory operation efficiency and enables an equipment smaller.

A method of using a continuous kneading mixer is not specially limited, but a dry cement mortar supplied is kneaded with water force-fed by a vane at the end of the mixer, and the wet cement mortar thus prepared is force-fed by a snake type pump connected with the end of the mixer and was kneaded and force-fed by a continuous kneading pressure-injecting machine. According to this method, it is not necessary to make a setting time of the agent A long, and an operation efficiency is satisfactory. Examples of the continuous kneading mixer include a continuous mixer pump G4 manufactured by German PFT Co.

When using agent B in slurry state, a method of mixing agent A and agent B comprises connecting a Y-shaped tube with a tube force-feeding a wet cement mortar, force-feeding a powdery accelerating agent by air through one tube of the Y-shaped tube, force-feeding water or a mixture of water and compressed air through another tube of the Y-shaped tube, and mixing the powdery accelerating agent and water immediately to prepare a slurry-like agent B before joining into the tube force-feeding the wet cement mortar (agent A). Also, when using a liquid accelerating agent completely dissolved in water, the completely dissolved liquid accelerating agent (agent B) or a mixture of agent B and compressed air is mixed with a wet cement mortar (agent A).

Further, in order to satisfactorily mix a wet cement mortar and a liquid accelerating agent, a mixing tube having a double tube structure having an inlet piece having a few holes in the surrounding fixed in the inside of the tube may be used, and a liquid accelerating agent is force-fed into a wet cement mortar force-fed by air, thereby producing a satisfactory mixture.

### EXAMPLES

Hereinafter, the present invention is further illustrated in more details by the following Test Examples.

### TEST EXAMPLE 1 (Reference)

A dry cement mortar comprising 100 mass parts of cement I and 200 mass parts of an aggregate shown in the following Table 1 was prepared. The dry cement mortar thus prepared was charged into a continuous mixer pump G4 manufactured by German PFT Co., and 20 mass parts of water was mixed with 100 mass parts of the dry cement mortar to prepare a wet cement mortar, and the wet cement mortar thus prepared was pressure-injected at an injecting performance of 2.1 m³/hr. A pressure injection property of the cement mortar was then measured. The results are shown in the following Table 1.

### (Materials used)

Cement I: Commercially available high-early-strength Portland cement having a specific gravity of 3.14
Aggregate (i): Lime sand having a maximum particle diameter of at most 1.5 mm prepared by sieving lime sand obtained in Oumi-cho, Niigata-ken
Aggregate (ii): Lime sand having a maximum particle diameter of at most 2.4 mm obtained by sieving lime sand obtained in Oumi-cho, Niigata-ken

### (Item to be measured)

Pressure injection property of cement mortar: A wet cement mortar was pressure-injected for 20 m by a concrete pump having an inner diameter of 25.4 mm through a pressure-injection hose, and was sprayed through a nozzle for 5 minutes. The pressure-injection state was visually observed, and a pressure injection property was evaluated to be bad (×) when pulsatory motion of the hose was remarkable, medium (Δ) when pulsatory motion of the hose is somewhat remarkable, and good (O) when pulsatory motion of the hose was not substantially remarkable.

**Table 1**

| Test Example No. | Aggregate | Pressure injection property of cement mortar | Note |
|---|---|---|---|
| 1-1 | (i) | Δ | Reference Example |
| 1-2 | (ii) | O | Reference Example |

### TEST EXAMPLE 2

A dry cement mortar comprising 100 mass parts of cement I, 200 mass parts of aggregate (i), 3 mass parts of calcium aluminate, 5 mass parts of slaked lime-containing material, 0.5 mass part of organic acid i, 0.1 mass part of water-reducing agent α, and 100 mass parts of gypsum per 100 mass parts of the calcium aluminate was prepared. 1 Mass part of fiber a was mixed with 100 mass parts of the above prepared dry cement mortar, and the resultant mixture was charged into a continuous mixer pump G4 manufactured by German PFT Co., and water was then mixed in such an amount as shown in the following Table 2 to 100 mass pats of the fiber-mixed dry cement mortar to prepare a wet cement mortar, and the wet cement mortar thus prepared was pressure-injected at an injecting performance of 2.1 m³/hr. Thereafter, a variable coefficient and an adhesion state of an attached material were measured. The results are shown in the following Table 2.

### (Materials used)

Calcium aluminate: Amorphous C₁₂A₇ having a specific gravity of 2.92 and a Blaine specific surface area of 5,900 cm²/g
Gypsum: Natural occurring anhydrous gypsum having a Braine specific surface area of 4,150 cm²/g
Slaked lime-containing material: Commercially available slaked lime having a particle diameter of 35 µm
Organic acid i: Commercially available tartaric acid
Water-reducing agent α: Commercially available β-naphthalenesulfonate-formaldehyde condensate
Fiber a: Commercially available vinylon fiber having a length of 6 mm

### (Items to be measured)

Variable coefficient: A wet cement mortar was sampled 10 times every 30 seconds from a discharge opening, and each sample was calculated in respect of mortar flow and standard deviation. A variable coefficient was determined by dividing standard deviation values of 10 samples by average value of mortar flow.

Adhesion state of attached material: An adhesion state of a cholesterol-like solidified material was recognized by observing the state of a distributing tube (inner diameter 25.4 mm) at an outlet part of a continuous mixer pump. A sample wherein an adhesion of a solidified material was recognized was evaluated to be bad (×), a case wherein an adhesion of a solidified material was not substantially recognized was evaluated to be medium (Δ), and a sample wherein an adhesion of a solidified material was not recognized at all was evaluated to be good (O).

**Table 2**

| Test Example No. Example | Water (mass part) | Variable coefficient % | Adhesion state |
|---|---|---|---|
| 2-1 | 15 | 1.6 | Δ |
| 2-2 | 17 | 1.6 | O |
| 2-3 | 20 | 1.4 | O |
| 2-4 | 23 | 1.3 | O |
| 2-5 | 25 | 1.0 | O |

| | | | |
|---|---|---|---|
| A water amount is a mass part per 100 mass parts of dry cement mortar. | | | |

### TEST EXAMPLE 3

A dry cement mortar comprising 100 mass parts of cement I, 200 mass parts of aggregate (i), 3 mass parts of calcium aluminate, 5 mass parts of slaked lime-containing material, 0.5 mass part of organic acid i, 0.1 mass part of water-reducing agent α and 100 mass parts of gypsum per 100 mass parts of the calcium aluminate was prepared. 1 Mass part of fiber a was mixed with 100 mass parts of the above prepared dry cement mortar, and the resultant mixture was charged into a continuous mixer pump G4 manufactured by German PFT Co., and water was mixed in a mass amount as shown in the following Table 3 to 100 mass parts of the above prepared dry cement mortar having fiber mixed to prepare a wet cement mortar which was then pressure-injected at an injecting performance of 2.1 m³ /hr.

On the other hand, 9 mass parts (calculated in terms of solid content) of accelerating agent a was force-fed to 100 mass parts of cement by a plunger type pump.

Further, an inlet piece was equipped before a nozzle, and this accelerating agent was pressure-mixed with a wet cement mortar passing through the inlet piece together with a compressed air of 0.2 MPa to prepare a quick-settable wet cement mortar. The quick-settable wet cement mortar thus prepared was calculated in respect of a pressure injection property of quick-settable mortar, a compression strength and a change in length. The results are shown in the following Table 3.

### (Material used)

Accelerating agent a: A commercially available liquid-like accelerating agent, i.e. a potassium aluminate type aqueous solution having a concentration of 48 mass%

### (Items to be measured)

Pressure injection property of quick-settable mortar: A wet cement mortar was pressure-injected 20 m through a pressure-injecting hose having an inner diameter of 25.4 mm by a concrete pump, and the pressure-injected wet cement mortar was mixed with an accelerating agent to prepare a quick-settable wet cement mortar, and the quick-settable wet cement mortar was sprayed for 5 minutes through a nozzle. A case wherein the nozzle was not occluded was evaluated to be good (O), a case wherein the nozzle was liable to be occluded was evaluated to be medium (Δ), and a case wherein the nozzle was occluded was evaluated to be bad (×).

Compression strength: Quick-settable wet cement mortar was loaded into a mold of 4 cm × 4 cm × 16 cm, and was cured in water at 20°C, and a compression strength was measured after a lapse of a predetermined time.

Change in length: With regard to a dry shrinkage resistance, a change in length was evaluated. The above prepared quick-settable cement mortar was sprayed onto molds of 4 cm (thickness) × 4 cm (breadth) × 16 cm (length), and was demolded to obtain a sample. The sample thus obtained was subjected to a length change test. The sample was cured in air under conditions of a temperature of 20°C and a humidity of 60% in accordance with JIS A 1129 dial gauge method to measure a change in length after a lapse of a predetermined time. A length after one day from spraying was determined to be standard length.

**Table 3**

| Test Example No. | Water (mass part) | Pressure injection property of quick-settable mortar | Compression strength 28 days (N/mm²) | Change in length 28 days (µ) |
|---|---|---|---|---|
| 3-1 | 15 | Δ | 60.0 | 920 |
| 3-2 | 17 | O | 55.7 | 1100 |
| 3-3 | 20 | O | 52.5 | 1450 |
| 3-4 | 23 | O | 50.1 | 1600 |
| 3-5 | 25 | O | 46.2 | 1900 |

| | | | | |
|---|---|---|---|---|
| A water amount is a mass part per 100 mass parts of dry cement mortar. | | | | |

### TEST EXAMPLE 4

A dry cement mortar was prepared from 100 mass parts of cement, 200 mass parts of aggregate (i), 3 mass parts of calcium aluminate, 5 mass parts of slaked lime-containing material, 0.5 mass part of organic acid i, 0.1 mass part of water-reducing agent α and 100 mass parts of gypsum per 100 mass parts of the calcium aluminate, and 1 mass part of fiber a was mixed with 100 mass parts of the above prepared dry cement mortar, and 20 mass parts of water was admixed to 100 mass parts of the dry cement mortar having fiber mixed to prepare a wet cement mortar, and 9 mass parts of an accelerating agent (calculated in terms of solid content) as shown in the following Table 4 per 100 mass parts of cement was immediately admixed with the wet cement mortar to prepare a quick-settable wet cement mortar, and the quick-settable wet cement mortar was subjected to measurement in the same manner as in Test Example 3, except that a dust amount, a rebound ratio, sagging and a compression strength were measured. The results are shown in the following Table 4.

### (Materials used)

Accelerating agent b: A commercially available liquid-like accelerating agent, i.e. No. 3 water-glass (sodium silicate aqueous solution) having a concentration of 48 mass%.
Accelerating agent c: A commercially available liquid-like accelerating agent, i.e. an aluminum sulfate aqueous solution having a concentration of 27 mass%.
Accelerating agent d: A commercially available liquid-like accelerating agent, i.e. a potassium hydroxide aqueous solution having a concentration of 40 mass %.

### (Items to be measured)

Dust amount: The above prepared quick-settable wet cement mortar was sprayed at a spraying speed of 2.1 m³/h for 30 minutes on an imitation tunnel of 3.5 m (height) × 2.5 m (breadth) × 3 m (depth) made of an arch-like iron plate for 5 minutes. A dust amount was measured every one minute at a position of 2 m from the side wall of the imitation tunnel, and the measured values were shown as an average value.

Rebound ratio: The above prepared quick-settable wet cement mortar was sprayed at a pressure-injecting speed of 2.1 m³/h for 2 minutes onto an imitation tunnel of 3.5 m (height) × 2.5 m (breadth) × 3 m (depth) made of an arch-like iron plate by a pressure-injecting hose having an inner diameter of 25.4 mm. Thereafter, (rebound ratio)=(mass of quick-settable wet cement mortar fallen without attaching to the imitation tunnel)/(mass of quick-settable wet cement mortar sprayed onto the imitation tunnel)x100 (%)was calculated.

Sagging: The above prepared quick-settable wet cement mortar was sprayed at a spraying speed of 2.1 m³/h for 2 minutes onto an imitation tunnel of 3.5 m (height) × 2.5 m (breadth) × 3 m (depth) made of an arch-like iron plate, and the spraying state was observed. A case wherein sagging did not occur was evaluated to be good (O), and a case wherein sagging occurred slightly was evaluated to be medium (Δ), and a case wherein sagging severely occurred was evaluated to be bad (×).

**Table 4**

| Test Example No. | Accelerating agent | Dust amount (mg/m³) | Rebound ratio (%) | Sagging | Compression strength (N/mm²) | | |
|---|---|---|---|---|---|---|---|
| | | | | | 1 hr | 24 hrs | 28 days |
| 3-3 | a | 2.2 | 1.8 | O | 1.9 | 23.8 | 52.5 |
| 4-1 | b | 3.2 | 3.2 | Δ | 0.3 | 6.4 | 38.0 |
| 4-2 | c | 2.8 | 2.9 | O | 0.8 | 8.6 | 45.9 |
| 4-3 | d | 2.9 | 4.1 | Δ | 0.3 | 8.4 | 39.1 |

### TEST EXAMPLE 5

A dry cement mortar was prepared from 100 mass parts of cement, aggregate (i) in a mass ratio as shown in the following Table 5 to the cement, 3 mass parts of calcium aluminate, 5 mass parts of slaked lime-containing material, 0.5 mass part of organic acid i, 0.1 mass part of water-reducing agent α, and 100 mass parts of gypsum per 100 mass parts of the calcium aluminate, and 1 mass part of fiber was mixed with 100 mass parts of the above prepared dry cement mortar, and 20 mass parts of water was admixed to 100 mass parts of the dry cement mortar having fiber mixed to prepare a wet cement mortar, and 9 mass parts of accelerating agent a (calculated in terms of solid content) per 100 mass parts of the cement was immediately admixed to the above prepared wet cement mortar to prepare a quick-settable wet cement mortar, and the quick-settable wet cement mortar thus prepared was subjected to measurement in the same manner as in Test Example 3, except that a crack resistance and a pressure injection property of quick-settable mortar were measured. The results are shown in the following Table 5.

### (Item to be measured)

Crack resistance: The above prepared quick-settable wet cement mortar was sprayed onto a mold of 20 cm (length) × 20 cm (breadth) × 4 cm (thickness), and was cured for 91 days in a room of a temperature of 20°C and a humidity of 60%. A case wherein at least 10 lines of cracks were produced was evaluated to be bad (×), a case wherein 1 to 9 cracks were produced was evaluated to be medium (Δ), and a case wherein a crack was not produced at all was evaluated to be good (O).

**Table 5**

| Test Example No. | Aggregate/cement ratio | Crack resistance | Pressure injection property of quick-settable mortar |
|---|---|---|---|
| 5-1 | 1.5 | A | Δ |
| 5-2 | 1.8 | O | O |
| 3-3 | 2.0 | O | O |
| 5-3 Reference | 2.7 | O | O |
| 5-4 Reference | 3.0 | O | Δ |

| | | | |
|---|---|---|---|
| An aggregate/cement ratio is a use ratio of an aggregate to cement (mass ratio). | | | |

### TEST EXAMPLE 6

A dry cement mortar was prepared from 100 mass parts of cement as shown in the following Table 6, 200 mass parts of aggregate (i), 3 mass parts of calcium aluminate, 5 mass parts of slaked lime-containing material, 0.5 mass part of organic acid i, 0.1 mass part of water-reducing agent α, and 100 mass parts of gypsum per 100 mass parts of the calcium aluminate, and 1 mass part of fiber was mixed with 100 mass parts of the dry cement mortar, and 20 mass parts of water was mixed with 100 mass parts of the dry cement mortar having fiber mixed to prepare a wet cement mortar, and 9 mass parts of accelerating agent a (calculated in terms of solid content) per 100 mass parts of the cement was immediately mixed with the wet cement mortar to prepare a quick-settable wet cement mortar, and the quick-settable wet cement mortar thus prepared was subjected to measurement in the same manner as in Test Example 3, except that a compression strength was measured. The results are shown in the following Table 6.

### (Material used)

Cement II: Commercially available ordinary Portland cement having a specific gravity of 3.16

**Table 6**

| Test Example No . | Cement | Compression strength (N/mm²) | | |
|---|---|---|---|---|
| | | 1 hr | 24 hrs | 28 days |
| 3-3 | I | 1.9 | 23.8 | 52.5 |
| 6-1 | II | 1.1 | 20.3 | 46.8 |

### TEST EXAMPLE.7

A dry cement mortar was prepared from 100 mass parts of cement, 200 mass parts of an aggregate as shown in the following Table 7, 3 mass parts of calcium aluminate, 5 mass parts of slaked lime-containing material, 0.5 mass part of organic acid i, 0.1 mass part of water-reducing agent α, and 100 mass parts of gypsum per 100 mass parts of the calcium aluminate, and 1 mass part of fiber was mixed with 100 mass parts of the above prepared dry cement mortar, and 20 mass parts of water was mixed with 100 mass parts of the dry cement mortar having fiber mixed to prepare a wet cement mortar, and 9 mass parts of accelerating agent a (calculated in terms of solid content) per 100 mass parts of the cement was immediately mixed with the wet cement mortar to prepare a quick-settable wet cement mortar, and the quick-settable wet cement mortar was subjected to measurement in the same manner as in Test Example 3, except that a rebound ratio was measured. The results are shown in the following

Table 7.

### (Material used)

Aggregate (iii): Lime sand having a maximum particle diameter of at most 3.5 mm obtained by sieving a product produced at Oumi-cho, Niigata-ken

**Table 7**

| Test Example No. | Aggregate | Rebound ratio (%) | Note |
|---|---|---|---|
| 3-3 | (i) | 1.8 | Example |
| 7-1 | (ii) | 2.5 | Example |
| 7-2 | (iii) | 4.5 | Comparative Example |

### TEST EXAMPLE 8

A dry cement mortar was prepared from 100 mass parts of cement I, 200 mass parts of aggregate (i), 3 mass parts of calcium aluminate, 5 mass parts of slaked lime-containing material, 0.5 mass part of organic acid i, 0.1 mass part of water-reducing agent α, and 100 mass parts of gypsum per 100 mass parts of the calcium aluminate. 1 Mass part of fiber a was mixed with 100 mass parts of the above prepared dry cement mortar, and the resultant mixture was charged into a continuous mixer pump G4 manufactured by German PFT Co., and 20 mass parts of water was mixed with 100 mass parts of the dry cement mortar having fiber mixed to prepare a wet cement mortar, and the wet cement mortar was force-fed at a pressure-injecting performance of 2.1 m³/hr.

On the other hand, 9 mass parts of accelerating agent e (calculated in terms of solid content) per 100 mass parts of the cement was immediately mixed with the wet cement mortar before a nozzle to prepare a quick-settable wet cement mortar. The quick-settable wet cement mortar was then subjected to measurement to measure a dust amount, a rebound ratio, sagging and a compression strength. The results are shown in the following Table 8.

### (Material used)

Accelerating agent e: A slurry-like accelerating agent, 100 mass parts of calcium aluminate, 100 mass parts of gypsum and 100 mass parts of water, which was prepared immediately before admixing with the wet cement mortar by adding water.

**Table 8**

| Test Example No. | Accelerating agent | Dust amount (mg/m³) | Rebound ratio (%) | Sagging | Compression strength (N/mm²) | | |
|---|---|---|---|---|---|---|---|
| | | | | | 1 hr | 24 hrs | 28 days |
| 8-1 | e | 3.1 | 1.7 | O | 2.1 | 25.6 | 55.8 |

### TEST EXAMPLE 9

A dry cement mortar was prepared from 100 mass parts of cement I, 200 mass parts of aggregate (i) and calcium aluminate in such a mass amount as shown in the following Table 9. The dry cement mortar thus prepared was charged into a continuous mixer pump G4 manufactured by German PFT Co., and 20 mass parts of water was mixed with 100 mass parts of the dry cement mortar to prepare a wet cement mortar, and the wet cement mortar was force-fed at pressure-injecting performance of 2.1 m³/hr.

On the other hand, 9 mass parts of accelerating agent a (calculated in terms of solid content) per 100 mass parts of the cement was force-fed by a plunger type pump.

Further, an inlet piece was equipped before a nozzle, and an accelerating agent was immediately pressure-injected and mixed with the wet cement mortar passing through the inlet piece together with a compressed air of 0.2 MPa to prepare a quick-settable wet cement mortar. The quick-settable wet cement mortar thus prepared was subjected to measurement to measure a pressure injection property of quick-settable mortar and a compression strength. The results are shown in the following Table 9.

**Table 9**

| Test Example No. | Calcium aluminates (mass part) | Pressure injection property of quick-settable mortar | Compression strength (N/mm²) | | |
|---|---|---|---|---|---|
| | | | 1 hr | 24 hrs | 28 days |
| 9-1 | 0 | O | *** | 18.9 | 55.3 |
| 9-2 | 0.5 | O | 0.4 | 18.7 | 54.1 |
| 9-3 | 2 | O | 0.8 | 21.4 | 52.1 |
| 9-4 | 3 | O | 1.0 | 22.5 | 46.2 |
| 9-5 | 5 | O | 1.8 | 29.8 | 46.6 |
| 9-6 | 10 | Δ | 2.6 | 33.4 | 40.1 |

| | | | | | |
|---|---|---|---|---|---|
| A calcium aluminate amount is a mass part per 100 mass parts of cement. *** Compression strength was unmeasurable since its value was too small. | | | | | |

### TEST EXAMPLE 10

A dry cement mortar was prepared from 100 mass parts of cement, 200 mass parts of aggregate (i), 3 mass parts of calcium aluminate, and gypsum in such a mass amount as shown in the following Table 10 per 100 mass parts of the calcium aluminate, and 20 mass parts of water was mixed with 100 mass parts of the dry cement mortar thus prepared to prepare a wet cement mortar, and 9 mass parts of accelerating agent a (calculated in terms of solid content) per 100 mass parts of the cement was immediately mixed with the wet cement mortar to prepare a quick-settable wet cement mortar, and the quick-settable wet cement mortar was subjected to measurement in the same manner as in Test Example 9, except that a compression strength was measured. The results are shown in the following Table 10.

**Table 10**

| Test Example No. | Gypsum (mass part) | Compression strength (N/mm²) | | |
|---|---|---|---|---|
| | | 1 hr | 24 hrs | 28 days |
| 9-4 | 0 | 1.0 | 22.5 | 46.2 |
| 10-1 | 20 | 1.2 | 24.2 | 52.5 |
| 10-2 | 50 | 1.6 | 25.1 | 53.2 |
| 10-3 | 100 | 1.9 | 25.7 | 54.4 |
| 10-4 | 200 | 1.9 | 25.9 | 56.8 |
| 10-5 | 300 | 1.8 | 26.3 | 59.6 |

| | | | | |
|---|---|---|---|---|
| A gypsum amount is a mass part per 100 mass parts of calcium aluminate. | | | | |

### TEST EXAMPLE 11

A dry cement mortar was prepared from 100 mass parts of cement, 200 mass parts of aggregate (i), 3 mass parts of calcium aluminate, and slaked lime-containing material in such a mass amount as shown in the following Table 11, and 20 mass parts of water was mixed with 100 mass parts of the dry cement mortar thus prepared to prepare a wet cement mortar, and 9 mass parts of accelerating agent a (calculated in terms of solid content) per 100 mass parts of the cement was immediately mixed with the wet cement mortar to prepare a quick-settable wet cement mortar, and the quick-settable wet cement mortar was subjected to measurement in the same manner as in Test Example 9, except that a compression strength was measured. The results are shown in the following Table 11.

**Table 11**

| Test Example No. | Slaked lime-containing material (mass part) | Compression strength (N/mm²) | | |
|---|---|---|---|---|
| | | 1 hr | 24 hrs | 28 days |
| 9-4 | 0 | 1.0 | 22.5 | 46.2 |
| 11-1 | 0.5 | 1.1 | 24.4 | 52.0 |
| 11-2 | 2 | 1.4 | 24.9 | 51.4 |
| 11-3 | 5 | 1.5 | 25.1 | 50.7 |
| 11-4 | 7 | 1.6 | 25.2 | 50.1 |
| 11-5 | 10 | 1.9 | 24.8 | 49.0 |

| | | | | |
|---|---|---|---|---|
| An amount of slaked lime-containing material is a mass part per 100 mass parts of cement. | | | | |

### TEST EXAMPLE 12

A dry cement mortar was prepared from 100 mass parts of cement, 200 mass parts of aggregate (i), 3 mass parts of calcium aluminate, and an organic acid in such a mass amount as shown in the following Table 12, and 20 mass parts of water was mixed with 100 mass parts of the dry cement mortar thus prepared to prepare a wet cement mortar, and 9 mass parts of accelerating agent a (calculated in terms of solid content) per 100 mass parts of the cement was immediately mixed with the wet cement mortar to prepare a quick-settable wet cement mortar, and the quick-settable wet cement mortar thus prepared was subjected to measurement in the same manner as in Test Example 9, except that sagging was measured. The results are shown in the following Table 12.

### (Material used)

Organic acid (ii): Commercially available sodium citrate

**Table 12**

| Test Example No. | Organic acid (mass part) | Sagging |
|---|---|---|
| 9-4 | -0 | O |
| 12-1 | i0.1 | O |
| 12-2 | i0.3 | O |
| 12-3 | i0.5 | O |
| 12-4 | i1.0 | O |
| 12-5 | i2.0 | Δ |
| 12-6 | ii0.5 | O |

| | | |
|---|---|---|
| An organic acid amount is a mass part per 100 mass parts of cement. | | |

### TEST EXAMPLE 13

A dry cement mortar was prepared from 100 mass parts of cement, 200 mass parts of aggregate (i), 3 mass parts of calcium aluminate, 5 mass parts of slaked lime-containing material, 0.5 mass part of organic acid i, and 100 mass parts of gypsum per 100 mass parts of the calcium aluminate, and fiber was mixed in such a mass amount as shown in the following Table 13 with 100 mass parts of the dry cement mortar thus prepared, and 20 mass parts of water was mixed with 100 mass parts of the dry cement mortar having fiber mixed to prepare a wet cement mortar, and 9 mass parts of accelerating agent a (calculated in terms of solid content) per 100 mass parts of the cement was immediately mixed with the above prepared wet cement mortar to prepare a quick-settable wet cement mortar, and the quick-settable wet cement mortar thus prepared was subjected to measurement in the same manner as in Test Example 9, except that a bending strength at a lapse of 28 days, a bending toughness at a lapse of 28 days and a pressure injection property of quick-settable mortar were measured. The results are shown in the following Table 13.

### (Material used)

Fiber b: Commercially available polypropylene fiber having a length of 6 mm

### (Items to be measured)

Bending strength at a lapse of 28 days: A bending strength at a lapse of 28 days of the above prepared quick-settable wet cement mortar was measured in accordance with "Bending Test Method of Steel Fiber-reinforced Concrete (JSCE-G 552-1999)" of the Japan Society of Civil Engineering.

Toughness at a lapse of 28 days: A toughness at a lapse of 28 days of the above prepared quick-settable wet cement mortar was measured in accordance with "Bending Test Method of Steel Fiber-reinforced Concrete (JSCE-G 552-1999)" of the Japan Society of Civil Engineering.

**Table 13**

| Test Example No. | Fibrous material (mass part) | 28 Day bonding strength (N/mm²) | 28 Day toughness (N/mm²), | Pressure injection property of quick-settable mortar |
|---|---|---|---|---|
| 13-1 | -0 | 8.9 | <0.5 | O |
| 13-2 | a0.4 | 10.2 | 0.75 | O |
| 13-3 | a0.5 | 10.4 | 1.02 | O |
| 13-4 | a1.0 | 11.2 | 1.35 | O |
| 13-5 | a1.2 | 10.9 | 1.52 | O |
| 13-6 | a1.5 | 10.6 | 1.73 | Δ |
| 13-7 | b1.0 | 11.0 | 1.15 | O |

| | | | | |
|---|---|---|---|---|
| An amount of fibrous material is' a mass part per 100 mass parts of dry cement mortar other than fibrous material. | | | | |

### TEST EXAMPLE 14

A dry cement mortar was prepared from 100 mass parts of cement, 200 mass parts of aggregate (i), 3 mass parts of calcium aluminate, 5 mass parts of slaked lime-containing material, 0.5 mass part of organic acid i, a thickener in such a mass amount as shown in the following Table 14, and 100 mass parts of,gypsum per 100 mass parts of the calcium aluminate, and 20 mass parts of water was mixed with 100 mass parts of the above prepared dry cement mortar to prepare a wet cement mortar, and 9 mass parts of accelerating agent a (calculated in terms of solid content) per 100 mass parts of the cement was immediately mixed with the above prepared wet cement mortar to prepare a quick-settable wet cement mortar, and the quick-settable wet cement mortar thus prepared was subjected to measurement in the same manner as in Test Example 9, except that a rebound ratio and a pressure injection property of quick-settable mortar were measured. The results are shown in the following Table 14.

### (Materials used)

Thickener A: Commercially available methyl cellulose
Thickener B: Commercially available polyethylene oxide

**Table 14**

| Test Example No. | Thickener (mass part) | Rebound ratio (%) | Pressure injection property of quick-settable mortar |
|---|---|---|---|
| 13-1 | -0 | 4.9 | O |
| 14-1 | A0.001 | 4.2 | O |
| 14-2 | A0.01 | 3.0 | O |
| 14-3 | A0.05 | 2.4 | O |
| 14-4 | A0.1 | 2.4 | O |
| 14-5 | A0.2 | 2.0 | Δ |
| 14-6 | B0.05 | 3.5 | O |

A thickener amount is a mass part per 100 mass parts of cement.

### TEST EXAMPLE 15

A dry cement mortar was prepared from 100 mass parts of cement, 200 mass parts of aggregate (i), 3 mass parts of calcium aluminate, 5 mass parts of slaked lime-containing material, 0.5 mass part of organic acid i, a water-reducing agent in such a mass amount as shown in the following Table 15, and 100 mass parts of gypsum per 100 mass parts of the calcium aluminate, and 20 mass parts of water was mixed with 100 mass parts of the above prepared dry cement mortar to prepare a wet cement mortar, and 9 mass parts of accelerating agent a (calculated in terms of solid content) per 100 mass parts of cement was immediately mixed with the above prepared wet cement mortar to prepare a quick-settable wet cement mortar, and the quick-settable wet cement mortar thus prepared was subjected to measurement in the same manner as in Test Example 9, except that a compression strength was measured. The results are shown in the following Table 15.

### (Materials used)

Water-reducing agent β: Commercially available methylnaphthalenesulfonate-formaldehyde condensate
Water-reducing agent γ: Commercially available bisphenol A sulfonate-formaldehyde condensate

**Table 15**

| Test Example No. | Water-reducing agent (mass part) | Compression strength (N/mm²) | | |
|---|---|---|---|---|
| | | 1 hr | 24 hrs | 28 days |
| 13-1 | -0 | 1.8 | 25.7 | 54.3 |
| 15-1 | α 0.03 | 1.7 | 24.1 | 52.7 |
| 15-2 | α 0.05 | 1.7 | 24.0 | 52.7 |
| 15-3 | α 0.1 | 1.7 | 24.0 | 52.5 |
| 15-4 | α 0.3 | 1.6 | 23.9 | 52.3 |
| 15-5 | α 0.5 | 1.4 | 23.9 | 51.9 |
| 15-6 | β 0.1 | 1.5 | 23.5 | 52.1 |
| 15-7 | γ 0.1 | 1.4 | 23.4 | 52.0 |

| | | | | |
|---|---|---|---|---|
| An amount of water-reducing agent is a mass part per 100 mass parts of cement. | | | | |

### TEST EXAMPLE 16

A dry cement mortar was prepared from 100 mass parts of cement, 200 mass parts of aggregate (i), 3 mass parts of calcium aluminate, 5 mass parts of slaked lime-containing material, 0.5 mass part of organic acid i, water-absorptive material A in such a mass amount as shown in the following Table 16, and 100 mass parts of gypsum per 100 mass parts of the calcium aluminate, and 20 mass parts of water was mixed with 100 mass parts of the above prepared dry cement mortar to prepare a wet cement mortar, and 9 mass parts of accelerating agent a (calculated in terms of solid content) per 100 mass parts of the cement was immediately mixed with the above prepared wet cement mortar to prepare a quick-settable wet cement mortar, and the quick-settable wet cement was subjected to measurement in the same manner as in Test Example 9, except that a pressure injection property of quick-settable mortar were measured. The results are shown in the following Table 16.

### (Material used)

Water-absorptive material A: A commercially available clay mineral, i.e. bentonite comprising montmorillonite as the main component

**Table 16**

| Test Example No. | Water-absorptive material A (mass part) | Pressure injection property of quick-settable mortar |
|---|---|---|
| 13-1 | 0 | O |
| 16-1 | 0.5 | O |
| 16-2 | 0.8 | O |
| 16-3 | 2 | O |
| 16-4 | 5 | O |
| 16-5 | 10 | Δ |

| | | |
|---|---|---|
| An amount of water-absorptive material is a mass part per 100 mass parts of cement. | | |

### TEST EXAMPLE 17

A dry cement mortar was prepared from 100 mass parts of cement, 200 mass parts of aggregate (i), 3 mass parts of calcium aluminate, 5 mass parts of slaked lime-containing material, 0.5 mass part of organic acid i, water-absorptive material B in such a mass amount as shown in the following Table 17, and 100 mass parts of gypsum per 100 mass parts of the calcium aluminate, and 20 mass parts of water was mixed with 100 mass parts of the above prepared dry cement mortar to prepare a wet cement mortar, and 9 mass parts of accelerating agent a (calculated in terms of solid content) per 100 mass parts of the cement was immediately mixed with the above prepared wet cement mortar to prepare a quick-settable wet cement mortar, and the quick-settable wet cement mortar thus prepared was subjected to measurement in the same manner as in Test Example 9, except that a compression strength was measured. The results are shown in the following Table 17.

### (Material used)

Water-absorptive material B: Commercially available water-absorptive polymer comprising poly-N-vinyl acetamide as the main component, having a water-absorbing magnification of 30 times and a maximum particle diameter of 150 µm

**Table 17**

| Test Example No. | Water-absorptive material B (mass part) | Pressure injection property of quick-settable mortar | Compression strength (N/mm²) | | |
|---|---|---|---|---|---|
| | | | 1 hr | 24 hrs | 28 days |
| 13-1 | 0 | O | 1.8 | 25.7 | 54.3 |
| 17-1 | 0.001 | O | 1.7 | 24.4 | 52.9 |
| 17-2 | 0.005 | O | 1.7 | 24.1 | 52.8 |
| 17-3 | 0.01 | O | 1.6 | 23.7 | 52.5 |
| 17-4 | 0.03 | O | 1.5 | 23.4 | 52.0 |
| 17-5 | 0.06 | O | 1.3 | 23.0 | 51.7 |
| 17-6 | 0.1 | Δ | 1.2 | 22.4 | 49.6 |

| | | | | | |
|---|---|---|---|---|---|
| An amount of water-absorptive material is a mass part per 100 mass parts of cement. | | | | | |

### TEST EXAMPLE 18

A dry cement mortar was prepared from 100 mass parts of cement, 200 mass parts of aggregate (i), 3 mass parts of calcium aluminate, 5 mass parts of slaked lime-containing material, 0.5 mass part of organic acid i, an alkali sulfate in such a mass amount as shown in the following Table 18, and 100 mass parts of gypsum per 100 mass parts of the calcium aluminate, and 20 mass parts of water was mixed with 100 mass parts of the dry cement mortar to prepare a wet cement mortar, and 9 mass parts of accelerating agent a (calculated in terms of solid content) per 100 mass parts of the cement was immediately mixed with the above prepared wet cement mortar to prepare a quick-settable wet cement mortar, and the quick-settable wet cement mortar thus prepared was subjected to measurement in the same manner as in Test Example 9, except that sagging and a compression strength were measured. The results are shown in the following Table 18.

### (Material used)

Alkali sulfate: Commercially available sodium sulfate

**Table 18**

| Test Example No. | Alkali sulfate (mass part) | Sagging | Compression strength (N/mm²) | | |
|---|---|---|---|---|---|
| | | | 1 hr | 24 hrs | 28 days |
| 13-1 | 0 | ○ | 1.8 | 25.7 | 54.3 |
| 18-1 | 0.2 | ○ | 1.8 | 25.9 | 53.8 |
| 18-2 | 0.5 | ○ | 1.7 | 26.8 | 52.7 |
| 18-3 | 1 | ○ | 1.7 | 27.1 | 52.0 |
| 18-4 | 3 | ○ | 1.5 | 28.2 | 51.2 |
| 18-5 | 5 | Δ | 1.0 | 29.8 | 50.4 |

| | | | | | |
|---|---|---|---|---|---|
| An amount of alkali sulfate is a mass part per 100 mass parts of cement. | | | | | |

### TEST EXAMPLE 19

A dry cement mortar was prepared from 100 mass parts of cement, 200 mass parts of aggregate (i), 3 mass parts of calcium aluminate, 5 mass parts of slaked lime-containing material, 0.5 mass part of organic acid i, an alkali carbonate in such a mass amount as shown in the following Table 19, and 100 mass parts of gypsum per 100 mass parts of the calcium aluminate, and 20 mass parts of water was mixed with 100 mass parts of the above prepared dry cement mortar to prepare a wet cement mortar, and 9 mass parts of accelerating agent a (calculated in terms of solid content) per 100 mass parts of the cement was immediately mixed with the above prepared wet cement mortar to prepare a quick-settable wet cement mortar, and the quick-settable wet cement mortar thus prepared was subjected to measurement in the same manner as in Test Example 9, except that sagging and a compression strength were measured. The results are shown in the following Table 19.

### (Material used)

Alkali carbonate: Commercially available sodium carbonate

**Table 19**

| Test Example No. | Alkali carbonate (mass part) | Sagging | Compression strength (N/mm²) | | |
|---|---|---|---|---|---|
| | | | 1 hr | 24 hrs | 28 days |
| 13-1 | 0 | ○ | 1.8 | 25.7 | 54.3 |
| 19-1 | 0.2 | ○ | 1.9 | 25.9 | 54.4 |
| 19-2 | 0.5 | ○ | 2.0 | 26.1 | 54.0 |
| 19-3 | 1 | ○ | 2.1 | 26.3 | 53.8 |
| 19-4 | 3 | ○ | 2.4 | 26.8 | 53.8 |
| 19-5 | 5 | Δ | 2.8 | 28.8 | 53.5 |

| | | | | | |
|---|---|---|---|---|---|
| An amount of alkali carbonate is a mass part per 100 mass parts of cement. | | | | | |

### TEST EXAMPLE 20

A dry cement mortar was prepared from 100 mass parts of cement, 200 mass parts of aggregate (i), 3 mass parts of calcium aluminate, 5 mass parts of slaked lime-containing material, 0.5 mass part of organic acid i, and thickener A, water-reducing agent α, water-absorptive material A, an alkali sulfate and an alkali carbonate in such amounts as shown in the following Table 20, and 100 mass parts of gypsum per 100 mass parts of the calcium aluminate, and fiber a was mixed with 100 mass parts of the above prepared dry cement mortar in such a mass amount as shown in the following Table 20, and 20 mass parts of water was mixed with 100 mass parts of the dry cement mortar having fiber mixed to prepare a wet cement mortar, and 9 mass parts of accelerating agent a (calculated in terms of solid content) per 100 mass parts of the cement was immediately mixed with the above prepared wet cement mortar to prepare a quick-settable wet cement mortar, and the quick-settable wet cement mortar thus prepared was subjected to measurement in the same manner as in Test Example 9, except that a bending strength at a lapse of 28 days, a bending toughness at a lapse of 28 days, a rebound ratio, sagging, a pressure injection property of quick-settable mortar, and a compression strength were measured. The results are shown in the following Table 21.

**Table 20**

| Test Example No. | Fiber (mass part) | Thickener (mass part) | Water-reducing agent (mass part) | Water-absorptive material A (mass part) | Alkali sulfate (mass part) | Alkali carbonate (mass part) |
|---|---|---|---|---|---|---|
| 13-1 | 0 | 0 | 0 | 0 | 0 | 0 |
| 20-1 | 1 | 0.05 | 0.1 | 2 | 1 | 1 |

An amount of fibrous material is a mass part per 100 mass parts of dry cement mortar. An amount of each of a thickener, a water-reducing agent, a water-absorptive material A, an alkali sulfate and an alkali carbonate is a mass part per 100 mass parts of cement.

**Table 21**

| Test Example No. | 28 Day bending strength (N/mm²) | 28 Day toughness (N/mm²) | Rebound ratio (%) | Sagging | Pressure injection property of quick-settable mortar | Compression strength (N/mm²) | | |
|---|---|---|---|---|---|---|---|---|
| | | | | | | 1 hr | 24 hrs | 28 days |
| 13-1 | 8.9 | <0.5 | 4.9 | ○ | ○ | 1.8 | 25.7 | 54.3 |
| 20-1 | 10.4 | 1.38 | 3.1 | ○ | ○ | 1.9 | 25.6 | 52.8 |

### TEST EXAMPLE 21

A dry cement mortar was prepared from 100 mass parts of cement I, 200 mass parts of aggregate (i), and a calcium aluminate in such a mass amount as shown in the following Table 22. 20 Mass parts of water was mixed with 100 mass parts of the above prepared dry cement mortar, and the resultant mixture was kneaded in a mortar mixer in accordance with JIS R 5201 to prepare a wet cement mortar. Accelerating agent a was added to the above prepared wet cement mortar in an amount of 9 mass parts (calculated in terms of solid content) per 100 mass parts of the cement in the wet cement mortar, and the mixture was kneaded for 10 seconds to prepare a quick-settable wet cement mortar. The quick-settable wet cement mortar thus prepared was measured with regard to an initial setting time and a final setting time. The results are shown in the following Table 22

### (Items to be measured)

Initial setting time: A time taken until a proctor-penetrating resistance value reaches 500 psi at 20°C after preparing a quick-settable wet cement mortar and then promptly loading the quick-settable wet cement mortar into a mold
Final setting time: A time taken until a proctor-penetrating resistance value reaches 4,000 psi at 20°C after preparing a quick-settable wet cement mortar and then promptly loading the quick-settable wet cement mortar into a mold

**Table 22**

| Test Example No. | Calcium aluminate (mass part) | Initial setting time (sec) | Final setting time (min) |
|---|---|---|---|
| 21-1 | 0 | 480 | >60 |
| 21-2 | 0.5 | 360 | 50 |
| 21-3 | 2 | <45 | 12 |
| 21-4 | 3 | <45 | 7 |
| 21-5 | 5 | <45 | 4 |
| 21-6 | 10 | <45 | <1 |

| | | | |
|---|---|---|---|
| A calcium aluminate amount is a mass part per 100 mass parts of cement. ***Compression strength was unmeasurable since its value was too small. | | | |

### TEST EXAMPLE 22

A dry cement mortar was prepared from 100 mass parts of cement, 200 mass parts of aggregate (i), 3 mass parts of calcium aluminate, and gypsum in such a mass amount as shown in the following Table 23 per 100 mass parts of the calcium aluminate, and 20 mass parts of water was mixed with 100 mass parts of the above prepared dry cement mortar to prepare a wet cement mortar, and 9 mass parts of accelerating agent a (calculated in terms of solid content) per 100 mass parts of the cement was immediately mixed with the above prepared wet cement mortar to prepare a quick-settable wet cement mortar, and the quick-settable wet cement mortar thus prepared was subjected to measurement in the same manner as in Test Example 21, except that an initial setting time and a final setting time were measured. The results are shown in the following Table 23.

**Table 23**

| Test Example No. | Gypsum (mass part) | Initial setting time (sec) | Final setting time (min) |
|---|---|---|---|
| 21-4 | 0 | <45 | 7 |
| 22-1 | 20 | <45 | 7 |
| 22-2 | 50 | <45 | 7 |
| 22-3 | 100 | <45 | 7 |
| 22-4 | 200 | <45 | 7 |
| 22-5 | 300 | 90 | 9 |

| | | | |
|---|---|---|---|
| A gypsum amount is a mass part per 100 mass parts of calcium aluminate. | | | |

### TEST EXAMPLE 23

A dry cement mortar was prepared from 100 mass parts of cement, 200 mass parts of aggregate (i), 3 mass parts of calcium aluminate, and slaked lime-containing material in such a mass amount as shown in the following Table 24, and 20 mass parts of water was mixed with 100 mass parts of the above prepared dry cement mortar to prepare a wet cement mortar, and 9 mass parts of accelerating agent a (calculated in terms of solid content) per 100 mass parts of the cement was immediately mixed with the above prepared wet cement mortar to prepare a quick-settable wet cement mortar, and the quick-settable wet cement mortar thus prepared was subjected to measurement in the same manner as in Test Example 21, except an initial setting time and a final setting time were measured. The results are shown in the following Table 24.

**Table 24**

| Test Example No. | Slaked lime-containing material (mass part) | Initial setting time (sec) | Final setting time (min) |
|---|---|---|---|
| 21-4 | 0 | <45 | 7 |
| 23-1 | 0.5 | <45 | 6 |
| 23-2 | 2 | <45 | 5 |
| 23-3 | 5 | <45 | 5 |
| 23-4 | 7 | <45 | 4 |
| 23-5 | 10 | <45 | 3 |

| | | | |
|---|---|---|---|
| An amount of slaked lime-containing material is a mass part per 100 mass parts of cement. | | | |

### TEST EXAMPLE 24

A dry cement mortar was prepared from 100. mass parts of cement, 200 mass parts of aggregate (i), 3 mass parts of calcium aluminate, and an organic acid in such a mass amount as shown in the following Table 25, and 20 mass parts of water was mixed with 100 mass parts of the above prepared dry cement mortar to prepare a wet cement mortar, and 9 mass parts of accelerating agent a (calculated in terms of solid content) per 100 mass parts of the cement was immediately mixed with the above prepared wet cement mortar to prepare a quick-settable wet cement mortar, and measurement was carried out in the same manner as in Test Example 21, except that a handling time of a wet cement mortar containing no accelerating agent and an initial setting time and a final setting time of the quick-settable mortar were measured. The results are shown in the following Table 25.

### (Item to be measured)

Handling time: A handling time was evaluated by measuring a mortar flow at a predetermined time after preparing a wet cement mortar containing no accelerating agent. The mortar flow was measured in accordance with JIS R 5201.

**Table 25**

| Test Example No. | Organic acids (mass part) | Initial setting time (sec) | Final setting time (min) | Handling time | |
|---|---|---|---|---|---|
| | | | | Mortar flow immediately after preparation (mm) | Mortar flow at a lapse of 30 min after preparation (mm) |
| 21-4 | -0 | <45 | 7 | 196 | 179 |
| 24-1 | i0.1 | <45 | 7 | 210 | 183 |
| 24-2 | i0.3 | <45 | 7 | 212 | 188 |
| 24-3 | i0.5 | <45 | 8 | 215 | 194 |
| 24-4 | i1.0 | 60 | 8 | 226 | 205 |
| 24-5 | i2.0 | 120 | 10 | 238 | 220 |
| 24-6 | ii0.5 | <45 | 12 | 213 | 192 |

| | | | | | |
|---|---|---|---|---|---|
| An amount of organic acid is a mass part per 100 mass part of cement. | | | | | |

### TEST EXAMPLE 25

A dry cement mortar was prepared from 100 mass parts of cement, 200 mass parts of aggregate (i), 3 mass parts of calcium aluminate, 5 mass parts of slaked lime-containing material, 0.5 mass part of organic acid i, a water-reducing agent in such a mass amount as shown in the following Table 26, and 100 mass parts of gypsum per 100 mass parts of the calcium aluminate, and 20 mass parts of water was mixed with 100 mass parts of the above prepared dry cement mortar to prepare a wet cement mortar, and measurement was carried out in the same manner as in Test Example 21, except that a fluidity of the wet cement mortar containing no accelerating agent was measured. The results are shown in the following Table 26.

### (Item to be measured)

Fluidity: A fluidity was evaluated by measuring a mortar flow of a wet cement mortar containing no accelerating agent. The mortar flow was measured in accordance with JIS R 5201.

**Table 26**

| Test Example No. | Water-reducing agent (mass part) | Fluidity (mm) |
|---|---|---|
| 25-1 | -0 | 197 |
| 25-2 | α0.03 | 202 |
| 25-3 | α0.05 | 207 |
| 25-4 | α0.1 | 212 |
| 25-5 | α0.3 | 219 |
| 25-6 | α0.5 | 229 |
| 25-7 | β0.1 | 208 |
| 25-8 | γ0.1 | 207 |

| | | |
|---|---|---|
| An amount of water-reducing agent is a mass part per 100 mass parts of cement. | | |

### TEST EXAMPLE 26

A dry cement mortar was prepared from 100 mass parts of cement, 200 mass parts of aggregate (i), 3 mass parts of calcium aluminate, 5 mass parts of slaked lime-containing material, 0.5 mass part of organic acid i, water-absorptive material A in such a mass amount as shown in the following Table 27, and 100 mass parts of gypsum per 100 mass parts of the calcium aluminate, and 20 mass parts of water was mixed with 100 mass parts of the above prepared dry cement mortar to prepare a wet cement mortar, and measurement was carried out in the same manner as in Test Example 21, except that a stiffness and a fluidity of the wet cement mortar containing no accelerating agent were measured. The results are shown in the following Table 27.

### (Item to be measured)

Stiffness: A stiffness of a wet cement mortar containing no accelerating agent was evaluated by a mortar flow value measured by loading the wet cement mortar into a flow cone and pulling the flow cone up without hitting in accordance with JIS R 5201.

**Table 27**

| Test Example No. | Water-absorptive material A (mass part) | Stiffness (mm) | Fluidity (mm) |
|---|---|---|---|
| 25-1 | 0 | 134 | 197 |
| 26-1 | 0.5 | 131 | 195 |
| 26-2 | 0.8 | 123 | 192 |
| 26-3 | 2 | 114 | 185 |
| 26-4 | 5 | 105 | 180 |
| 26-5 | 10 | 101 | 174 |

| | | | |
|---|---|---|---|
| An amount of water-absorptive material is a mass part per 100 mass parts of cement. | | | |

### TEST EXAMPLE 27

A dry cement mortar was prepared from 100 mass parts of cement, 200 mass parts of aggregate (i), 3 mass parts of calcium aluminate, 5 mass parts of slaked lime-containing material, 0.5 mass part of organic acid i, water-absorptive material B in such a mass amount as shown in the following Table 28, and 100 mass parts of gypsum per 100 mass parts of the calcium aluminate, and 20 mass parts of water was mixed with 100 mass parts of the above prepared dry cement mortar to prepare a wet cement mortar, and measurement was carried out in the same manner as in Test Example 21, except that a stiffness and a fluidity of the above prepared wet cement mortar containing no accelerating agent were measured. The results are shown in the following Table 28.

**Table 28**

| Test Example No. | Water-absorptive material B (mass part) | Stiffness (mm) | Fluidity (mm) |
|---|---|---|---|
| 25-1 | 0 | 134 | 197 |
| 27-1 | 0.001 | 130 | 194 |
| 27-2 | 0.005 | 126 | 188 |
| 27-3 | 0.01 | 121 | 180 |
| 27-4 | 0.03 | 113 | 170 |
| 27-5 | 0.06 | 104 | 161 |
| 27-6 | 0.1 | 100 | 152 |

| | | | |
|---|---|---|---|
| An amount of water-absorptive material is a mass part per 100 mass parts of cement. | | | |

### TEST EXAMPLE 28

A dry cement mortar was prepared from 100 mass parts of cement, 200 mass parts of aggregate (i), 3 mass parts of calcium aluminate, 5 mass parts of slaked lime-containing material, 0.5 mass part of organic acid i, an alkali sulfate in such a mass amount as shown in the following Table 29, and 100 mass parts of gypsum per 100 mass parts of the calcium aluminate, and 20 mass parts of water was mixed with 100 mass parts of the above prepared dry cement mortar to prepare a wet cement mortar, and 9 mass parts of accelerating agent a (calculated in terms of solid content) per 100 mass parts of the cement was immediately mixed with the above prepared wet cement mortar to prepare a quick-settable wet cement mortar, and the quick-settable wet cement mortar thus obtained was subjected to measurement in the same manner as in Test Example 21, except that an initial setting time and a final setting time were measured. The results are shown in the following Table 29.

**Table 29**

| Test Example No. | Alkali sulfate (mass part) | Initial setting time (sec) | Final setting time (min) |
|---|---|---|---|
| 25-1 | 0 | <45 | 5 |
| 28-1 | 0.2 | <45 | 6 |
| 28-2 | 0.5 | <45 | 8 |
| 28-3 | 1 | <45 | 9 |
| 28-4 | 3 | 180 | >15 |
| 28-5 | 5 | 300 | >15 |

| | | | |
|---|---|---|---|
| An amount of alkali sulfate is a mass part per 100 mass parts of cement. | | | |

### TEST EXAMPLE 29

A dry cement mortar was prepared from 100 mass parts of cement, 200 mass parts of aggregate (i), 3 mass parts of calcium aluminate, 5 mass parts of slaked lime-containing material, 0.5 mass part of organic acid i, an alkali carbonate in such a mass amount as shown in the following Table 30, and 100 mass parts of gypsum per 100 mass parts of the calcium aluminate, and 20 mass parts of water was mixed with 100 mass parts of the above prepared dry cement mortar to prepare a wet cement mortar, and 9 mass parts of accelerating agent a (calculated in terms of solid content) per 100 mass parts of cement was immediately mixed with the above prepared wet cement mortar to prepare a quick-settable wet cement mortar, and the quick-settable wet cement mortar thus obtained was subjected to measurement in the same manner as in Test Example 21, except that an initial setting time and a final setting time were measured. The results are shown in the following Table 30.

**Table 30**

| Test Example No. | Akali carbonate (mass part) | Initial setting time (sec) | Final setting time (min) |
|---|---|---|---|
| 25-1 | 0 | <45 | 5 |
| 29-1 | 0.2 | <45 | 6 |
| 29-2 | 0.5 | <45 | 6 |
| 29-3 | 1 | <45 | 5 |
| 29-4 | 3 | 60 | 3 |
| 29-5 | 5 | 180 | 3 |

| | | | |
|---|---|---|---|
| An amount of alkali carbonate is a mass part per 100 mass parts of cement. | | | |

### TEST EXAMPLE 30

A dry cement mortar was prepared from 100 mass parts of cement, 200 mass parts of aggregate (i), 3 mass parts of calcium aluminate, 5 mass parts of slaked lime-containing material, 0.5 mass part of organic acid i, and thickener A, water-reducing agent α, water-absorptive material A, an alkali sulfate and an alkali carbonate in such mass amounts as shown in the following Table 31, and 100 mass parts of gypsum per 100 mass parts of the calcium aluminate, and fiber a in such a mass amount as shown in the following Table 31 was mixed with 100 mass amounts of the above prepared dry cement mortar, and 20 mass parts of water was mixed with 100 mass parts of the dry cement mortar having fiber mixed to prepare a wet cement mortar, and the wet cement mortar thus prepared was subjected to measurement in the same manner as in Test Example 21, except that a fluidity of the above prepared wet cement mortar containing no accelerating agent was measured. The results are shown in the following Table 32.

**Table 31**

| Test Example No. | Fiber (mass part) | Thickener (mass part) | Water-reducing agent (mass part) | Water-absorptive material A (mass part) | Alkali sulfate (mass part) | Alkali carbonate (mass part) |
|---|---|---|---|---|---|---|
| 25-1 | 0 | 0 | 0 | 0 | 0 | 0 |
| 30-1 | 1 | 0.05 | 0.1 | 2 | 1 | 1 |

An amount of fibrous material is a mass part per 100 mass parts of dry cement mortar. An amount of each of a thickener, a water-reducing agent, a water-absorptive material, an alkali sulfate and an alkali carbonate is a mass part per 100 mass parts of cement.

**Table 32**

| Test Example No. | Fluidity (mm) |
|---|---|
| 25-1 | 197 |
| 30-1 | 201 |

### EFFECT OF THE INVENTION

As mentioned above, according to the present invention, a pressure injection property of a cement mortar becomes satisfactory by specifically selecting an aggregate having a specific maximum particle size to an inner diameter of a distributing tube pressure-injecting the cement mortar. Also, by using a dry cement mortar prepared from a cement and an aggregate at a specific ratio and using water in a specific amount to prepare a wet cement mortar, operation troubles during a long running use can be remarkably reduced, and a quick-settable wet cement mortar maintaining a uniform kneaded state which can be used at a spring water place, can be prepared. Thus, a set product obtained therefrom has a stable quality, and an excellent structure can be obtained.

Further, the cement mortar employed by the present invention is excellent in a bending strength, a setting property, a strength-developing property (including a strength-accelerating effect of initial stage, long stage and at a lapse of one day), and a crack resistance, and provides a satisfactory workability, a fluidity and a pressure injection property without substantially producing a duct and without causing unpreferable rebounding, sagging and peeling, and provides a satisfactory handling time and a satisfactory stiffness without varying qualities, and also achieves an effect of making a solidified material hardly attachable to an inner wall of a pressure-injecting tube.

Also, a wet cement mortar having a stable quality even after continuous kneading can be obtained by using a specific material, and therefore it can be a reliable repairing material usable as a spraying material for repairing. Further, by using an accelerating agent having a satisfactory quick-settable force, repairing can be finished by one time spraying without requiring double spraying. Thus, an operation time can be reduced.

## Claims

1. A spraying method which comprises continuously preparing a wet cement mortar by mixing water with a dry cement mortar in a continuous mixing system mixer during force-feeding, wherein the dry cement mortar contains
(i) cement;
(ii) an aggregate having a maximum particle diameter ratio of at most 0.1 to an inner diameter of a distributing tube force-feeding the cement mortar, said aggregate being used in a mass ratio to the cement of from (Aggregate/Cement) 1.5 to 2.5; and
(iii) an accelerating agent which is at least one member selected from the group consisting of a calcium aluminate, an alkali metal aluminate, aluminum sulfate, a silicate, and a hydroxide,
wherein water is contained in the wet cement mortar in an amount of from 15 to 25 mass parts to 100 mass parts of the dry cement mortar.

2. The spraying method according to Claim 1, wherein the dry cement mortar further contains a slaked lime-containing material.

3. The spraying method according to Claim 1 or 2, wherein the dry cement mortar further contains an organic acid.

4. The spraying method according to any one of Claims 1 to 3, wherein the dry cement mortar further contains a fibrous material.

5. The spraying method according to any one of Claims 1 to 4, wherein the dry cement mortar further contains a thickener.

6. The spraying method according to any one of Claims 1 to 5, wherein the dry cement mortar further contains a water-reducing agent.

7. The spraying method according to any one of Claims 1 to 6, wherein the dry cement mortar further contains a water-absorptive material.

8. The spraying method according to any one of Claims 1 to 7, which further contains an alkali metal sulfate and/or an alkali metal carbonate.

9. The spraying method according to Claim 1, wherein the accelerating agent is a calcium aluminate.

10. The spraying method according to Claim 9, wherein the dry cement mortar further contains gypsum.

11. The spraying method according to any one of Claims 1 to 10 which further comprises admixing an accelerating agent with the wet cement mortar during force-feeding.

12. The spraying method according to any one of Claims 1 to 10 in tunnel construction or for repairing.

## Patentansprüche

1. Sprühverfahren, das eine kontinuierliche Herstellung eines feuchten Zementmörtels durch Vermischen von Wasser mit einem trockenen Zementmörtel in einem kontinuierlichen Mischsystem unter Druck umfasst, wobei der trockene Zementmörtel enthält
(i) Zement;
(ii) ein Aggregat mit einem maximalen Verhältnis der Teilchendurchmesser von höchstens 0,1, bezogen auf einen Innendurchmesser eines Verteilungsrohrs das den Zementmörtel unter Druck liefert, wobei das Aggregat in einem Massenverhältnis zu Zement (Aggregat/Zement) von 1,5 bis 2,5 verwendet wird; und
(ii) ein Beschleuniger, der mindestens ein Element ist, ausgewählt aus der Gruppe, bestehend aus Kalziumaluminat, einem Alkalimetallaluminat, Aluminiumsulfat, einem Silikat und einem Hydroxid,
wobei Wasser in dem feuchten Zementmörtel in einer Menge von 15 bis 25 Masseteile pro 100 Masseteile des trockenen Zementmörtels enthalten ist.

2. Das Sprühverfahren nach Anspruch 1, wobei der trockene Zementmörtel ferner Kalziumhydroxid enthält.

3. Das Sprühverfahren nach Anspruch 1 oder 2, wobei der trockene Zementmörtel ferner eine organische Säure enthält.

4. Das Sprühverfahren nach einem der Ansprüche 1 bis 3, wobei der trockene Zementmörtel ferner ein Fasermaterial enthält.

5. Das Sprühverfahren nach einem der Ansprüche 1 bis 4, wobei der trockene Zementmörtel ferner ein Verdickungsmittel enthält.

6. Das Sprühverfahren nach einem der Ansprüche 1 bis 5, wobei der trockene Zementmörtel ferner ein wasserentziehendes Mittel enthält.

7. Das Sprühverfahren nach einem der Ansprüche 1 bis 6, wobei der trockene Zementmörtel ferner ein wasserabsorbierendes Material enthält.

8. Das Sprühverfahren nach einem der Ansprüche 1 bis 7, das ferner ein Alkalimetallsulfat und/oder ein Alkalimetallcarbonat enthält.

9. Das Sprühverfahren nach Anspruch 1, wobei der Beschleuniger Kalziumaluminat ist.

10. Das Sprühverfahren nach Anspruch 9, wobei der trockene Zementmörtel ferner Gips enthält.

11. Das Sprühverfahren nach einem der Ansprüche 1 bis 10, das ferner eine Beimischung eines Beschleunigers zu dem nassen Zementmörtel unter umfasst.

12. Das Sprühverfahren nach einem der Ansprüche 1 bis 10, das im Tunnelbau oder zur Reparatur eingesetzt wird.

## Revendications

1. Procédé de pulvérisation qui comprend la préparation en continu d'un mortier de ciment humide par mélange d'eau avec un mortier de ciment sec dans un mélangeur à système de mélange en continu durant une alimentation forcée, dans lequel le mortier de ciment sec contient
(i) du ciment ;
(ii) un agrégat ayant un rapport de la granulométrie maximale sur le diamètre intérieur d'un tube distributeur alimentant à force le mortier de ciment d'au plus 0,1, ledit agrégat étant utilisé en un rapport en masse par rapport au ciment (agrégat/ciment) de 1,5 à 2,5 ; et
(iii) un agent accélérateur qui est au moins un membre choisi dans l'ensemble constitué par un aluminate de calcium, un aluminate de métal alcalin, le sulfate d'aluminium, un silicate, et un hydroxyde,
dans lequel de l'eau est présente dans le mortier de ciment humide en une quantité de 15 à 25 parties en masse pour 100 parties en masse du mortier de ciment sec.

2. Procédé de pulvérisation selon la revendication 1, dans lequel le mortier de ciment sec contient en outre un matériau contenant de la chaux éteinte.

3. Procédé de pulvérisation selon la revendication 1 ou 2, dans lequel le mortier de ciment sec contient en outre un acide organique.

4. Procédé de pulvérisation selon l'une quelconque des revendications 1 à 3, dans lequel le mortier de ciment sec contient en outre un matériau fibreux.

5. Procédé de pulvérisation selon l'une quelconque des revendications 1 à 4, dans lequel le mortier de ciment sec contient en outre un épaississant.

6. Procédé de pulvérisation selon l'une quelconque des revendications 1 à 5, dans lequel le mortier de ciment sec contient en outre un agent réducteur d'eau.

7. Procédé de pulvérisation selon l'une quelconque des revendications 1 à 6, dans lequel le mortier de ciment sec contient en outre un matériau absorbant l'eau.

8. Procédé de pulvérisation selon l'une quelconque des revendications 1 à 7, qui contient en outre un sulfate de métal alcalin et/ou un carbonate de métal alcalin.

9. Procédé de pulvérisation selon la revendication 1, dans lequel l'agent accélérateur est un aluminate de calcium.

10. Procédé de pulvérisation selon la revendication 9, dans lequel le mortier de ciment sec contient en outre du gypse.

11. Procédé de pulvérisation selon l'une quelconque des revendications 1 à 10, qui comprend en outre le mélange d'un agent accélérateur avec le mortier de ciment humide durant l'alimentation forcée.

12. Procédé de pulvérisation selon l'une quelconque des revendications 1 à 10 dans la construction d'un tunnel ou pour une réparation.
